# EUROPÄISCHE PATENTSCHRIFT

(11) **EP 1 830 049 B1**
(45) Veröffentlichungstag und Bekanntmachung des Hinweises auf die Patenterteilung: **19.08.2009**
(21) Anmeldenummer: 07001693.6
(22) Anmeldetag: 26.01.2007
(51) Int. Cl.: F02B 37/22, F02B 37/24, F02D 23/00

(54) **Verfahren und Steuergerät zur Einstellung eines Turbinenströmungsquerschnitts eines Turboladers**
Method and control unit for adjusting in a turbocharger a turbine flow cross section
Procédé et appareil de commande destinés au réglage d'une section de passage de turbine d'un turbocompresseur

(30) Priorität: 03.03.2006 DE 102006009864
(43) Veröffentlichungstag der Anmeldung: 05.09.2007
(73) Patentinhaber: Dr. Ing. h.c. F. Porsche Aktiengesellschaft, 70435 Stuttgart (DE)
(72) Erfinder: Lanz, Hans-Werner, 71665 Vaihingen/Enz (DE); Müller, Björn, 63674 Altenstadt (DE)

(56) Entgegenhaltungen:
- EP-A1- 0 870 915
- DE-A1- 19 821 902
- DE-C1- 4 025 901
- JP-A- 60 022 032

## Beschreibung

Die Erfindung betrifft ein Verfahren nach den Oberbegriffen der unabhängigen Ansprüche. Ein solches Verfahren und ein solches Steuergerät ist jeweils aus der DE 198 21 902 A1 bekannt.

Diese Schrift beschreibt eine Ladedruckregelung für einen Abgas-Turbolader mit variabler Turbinengeometrie (VTG) bei einem Verbrennungsmotor. Als Beispiele von Verbrennungsmotoren werden Dieselmotoren und gemischansaugende und direkt einspritzende Benzinmotoren genannt. Ferner heißt es in der DE 198 21 902 A1, dass der üblicherweise al PI-Regler ausgeführte Ladedruckregler begrenzt werden müsse, um bei Nichterreichen einer stationären Genauigkeit ein ständiges Aufintegrieren des Reglers zu vermeiden. Der Verstellbereich des Reglers sei größer als die Einstellbandbreite des Ladedrucks, so dass der Ladedruck an den Rändern des Verstellbereichs des Reglers nicht mehr auf Stellgrößenänderungen reagiere. Zur Abhilfe seien kennfeldgesteuerte dynamische Begrenzungen bekannt, die jedoch aufwendig seien und nicht immer zu optimalen Ergebnissen führen würden. Eingangsgrößen einer solchen kennfeldgesteuerten Begrenzung werden nicht angegeben. Nachteilig sei insbesondere eine unerwünschte Ladedrucküberhöhung bei einem Lastsprung.

Um solche Ladedrucküberhöhungen in instationären Betriebszuständen zu vermeiden, ohne dabei das Regelverhalten in stationären Betriebszuständen zu beeinträchtigen, schlägt die DE 198 21 902 vor, den Regelbereich bei instationären Betriebszuständen in Abhängigkeit von einer gefilterten, vorzugsweise die Last charakterisierenden Führungsgröße der Ladedruckregelung zu begrenzen. Als Beispiel einer solchen Führungsgröße wird eine Einspritzmenge eines Dieselmotors genannt.

Die Vermeidung von Ladedrucküberhöhungen bei einem sprunghaften Anstieg einer Last des Verbrennungsmotors stellt ein Optimierungskriterium unter anderen möglichen Optimierungskriterien dar. Unter bestimmten Voraussetzungen kann es genauso wichtig oder noch wichtiger sein, einen möglichst schnellen Drehmomentaufbau bei einem positiven Lastwechsel zu ermöglichen. Dabei wird unter einem positiven Lastwechsel jeder Lastwechsel mit einer Zunahme der Last verstanden, wobei die Last weitgehend mit dem vom Verbrennungsmotor erzeugten Drehmoment korreliert.

Die Reduzierung des Überschwingers durch eine Begrenzung der Reglerstellgröße kann aber auch zu dem unerwünschten Effekt führen, dass die Verzögerung, mit dem der Istwert des Drehmoments einer Änderung seines Sollwerts in einem instationären Betriebszustand folgt, vergrößert wird. Eine solche Verzögerung ist bei einem Verbrennungsmotor eines Kraftfahrzeuges für die Fahrbarkeit und den subjektiven Fahreindruck, den das Kraftfahrzeug vermittelt, störend.

Vor diesem Hintergrund besteht die Aufgabe der Erfindung in der Angabe eines Verfahrens, mit denen sich ein möglichst schneller Drehmomentaufbau bei einem instationären Betriebszustand mit erhöhter Drehmomentanforderung erzielen lässt.

Diese Aufgabe wird bei einem Verfahren der eingangs genannten Art durch die Merkmale des unabhängigen Anspruchs gelöst.

Grundsätzlich ist es überraschend, dass die Forderung nach einem möglichst schnellen Ladedruckaufbau überhaupt mit einer Begrenzung des Turbinenströmungsquerschnitts nach unten, also mit der Bestimmung einer betriebsparameterabhängigen unteren Grenze eines Bereichs einstellbarer Werte des Turbinenströmungsquerschnitts, verträglich ist. Man würde vielmehr erwarten, dass sich der Ladedruck gerade dann am schnellsten aufbaut, wenn ein möglichst großer Teil der Abgasenergie auf ein Turbinenrad des Turboladers übertragen wird, was bei einem kleineren Turbinenströmungsquerschnitt eher der Fall ist als bei einem größeren Turbinenströmungsquerschnitt.

Bei vorgegebenem Abgasmassenstrom steigt der Wert der übertragenen Energie mit steigendem Druckgefälle über der Turbine. Weil der Druck der Abgase nach dem Durchströmen der Turbine im Wesentlichen konstant ist und nur geringfügig höher als der Umgebungsdruck ist, ist das Druckgefälle vor allem von der Aufstauwirkung der Turbine abhängig, das bei minimalem Turbinenströmungsquerschnitt maximal ist.

Mit der Aufstauwirkung steigt jedoch auch der Abgasgegendruck, der sich bei geöffneten Auslassventilen in den Brennräumen des Verbrennungsmotors einstellt. Da Einlassventil und Auslassventil eines Brennraums während der sogenannten Ventilüberschneidung gemeinsam geöffnet sind, behindert der erhöhte Abgasgegendruck das Einströmen von Luft- oder Kraftstoff/Luft-Gemisch bei offenem Einlassventil. Durch einen hohen Abgasgegendruck wird daher die Füllung der Brennräume mit brennfähigem Gemisch und damit die Drehmomententwicklung ungünstig beeinflusst.

Außerdem sinkt die zur Turbine strömende Abgasmenge und Wärmeenergie ab, wenn die Menge des in die Brennräume zurückgeführten Abgases ansteigt. Auch wenn dann, relativ betrachtet, ein maximaler Energieanteil auf das Turbinenrad übertragen wird, ist der Absolutwert der übertragenen Energie dann unter Umständen nicht optimal, was zu einem verzögerten Aufbau des Ladedrucks führt.

Die Erfinder haben erkannt, dass diese Verzögerung nicht allein vom Wert des Abgasgegendrucks abhängt, sondern dass die Verzögerung eher mit einem anderen motorischen Parameter korreliert. Dieser motorische Parameter, in dem sich optimale und suboptimale Drehmoment- und Ladedruck-Verläufe unterscheiden, ist das sogenannte Spülgefälle. Dieser Begriff bezeichnet die Differenz p2 - p3 aus dem in Richtung der Gasströmung vor dem Einlassventil herrschenden Druck p2 und dem hinter dem Auslassventil herrschenden Druck p3.

Das Spülgefälle ist im ungünstigsten Fall negativ. Mit anderen Worten: Der Druck p3 ist größer als der Druck p2. Man kann das Spülgefälle prinzipiell messen oder aus einer mehr oder weniger großen Zahl von Betriebsparametern des Verbrennungsmotors modellieren. Es hat sich jedoch gezeigt, dass der Wert des Spülgefälles, bei dem sich ein optimal schneller Ladedruck- und Drehmomentanstieg ergibt, nur wenig variiert und in Abhängigkeit von wenigen Parametern beschrieben werden kann.

Das Spülgefälle selbst hängt aber stark von dem Turbinenströmungsquerschnitt und dem Abgasmassenstrom ab, der wiederum mit der Drehzahl korreliert. Qualitativ betrachtet steigt das Spülgefälle mit steigender Drehzahl und nimmt mit wachsendem Turbinenströmungsquerschnitt ab. Für eine bestimmte Drehzahl gibt es daher Turbinenströmungsquerschnitte, bei denen noch kein kritisches Spülgefälle auftritt, und andere, kleinere Turbinenströmungsquerschnitte, bei denen bereits ein kritisches Spülgefälle auftritt.

Die Drehzahl ist ein Betriebsparameter, der bei modernen Verbrennungsmotoren ohnehin erfasst und ausgewertet wird. Die Verwendung der Drehzahl als Betriebsparameter zur Bestimmung der unteren Grenze eines Bereichs einstellbarer Werte des Turbinenströmungsquerschnitts ermöglicht daher eine mit Blick auf einen möglichst schnellen Ladedruck- und Drehmomentanstieg optimale Einstellung des Turbinenströmungsquerschnitts in einem instationären Betriebszustand ohne zusätzliche Sensorik. Dies gilt unabhängig davon, ob die Erfindung in ihren Verfahrensaspekten oder in einer Realisierung in Form eines durch eine spezielle Programmierung eingerichteten Steuergeräts betrachtet wird.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Verbrennungsmotor mit einem Turbolader mit variabler Turbinengeometrie;
- Fig. 2: eine Prinzip-Darstellung der Variation der Turbinengeometrie;
- Fig. 3: eine Funktionsblockdarstellung von Verfahrens- und Vorrichtungsmerkmalen eines Ausführungsbeispiels der Erfindung; und
- Fig. 4: zeitliche Verläufe eines Ladedrucksollwerts und je eines Ladedruckistwertes bei der Erfindung und dem Stand der Technik.

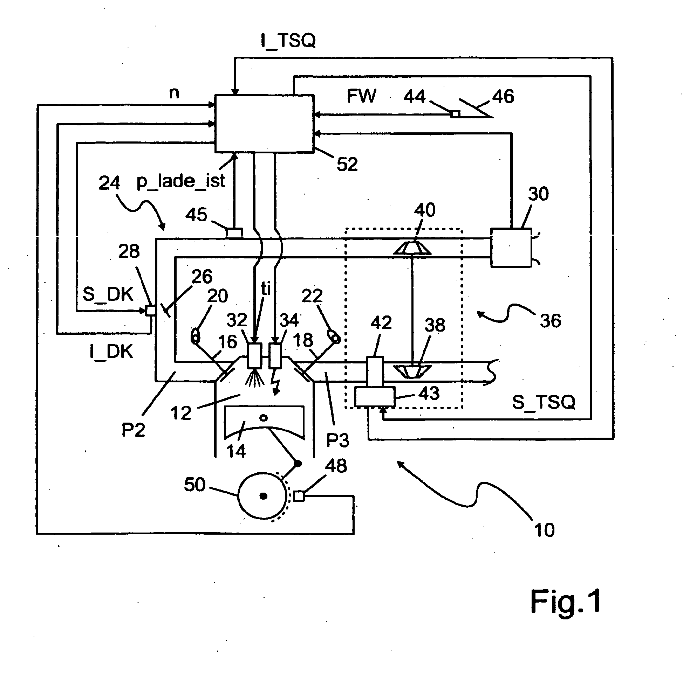

Im Einzelnen zeigt Fig. 1 einen Verbrennungsmotor 10 mit wenigstens einem Brennraum 12, der von einem Kolben 14 beweglich abgedichtet wird. Ein Wechsel von Füllungen des Brennraums 12 wird über ein Einlassventil 16 und ein Auslassventil 18 gesteuert, wobei das Einlassventil 16 von einem Einlassventilsteller 20 und das Auslassventil 18 von einem Auslassventilsteller 22 betätigt wird. Der Einlassventilsteller 20 steuert das Einlassventil 16 in einer Ausgestaltung mit einem variablen Hub und dient so als Füllungsstellglied.

Bei geöffnetem Einlassventil 16 strömt Luft oder ein Gemisch aus Luft und Brennstoff aus einem Ansaugsystem 24 in den Brennraum 12. Die Menge der einströmenden Luft oder des einströmenden Gemisches wird alternativ oder ergänzend zu einer Variation des Hubes des Einlassventils 16 über eine Drosselklappe 26 eingestellt, die durch einen Drosselklappensteller 28 betätigt wird. In jedem Fall wird die Brennraumfüllung dabei maßgeblich vom Druck p2 vor dem Einlassventil 16 beeinflusst. Der Drosselklappensteller 28 weist in einer Ausgestaltung einen integrierten Drosselklappensensor auf, der eine Information I_DK über einen Istwert des Öffnungswinkels der Drosselklappe 26 bereitstellt.

Die Brennraumfüllung wird bevorzugt aus dem Signal eines Füllungssensors 30 bestimmt, der als Luftmassenmesser oder Saugrohrdrucksensor realisiert sein kann. So kann die Füllung zum Beispiel als auf die Drehzahl und Zylinderzahl normierte Ansaugluftmasse ml bestimmt werden. Es versteht sich, dass ein Saugrohrdrucksensor auch ergänzend zu einem Luftmassenmesser vorgesehen sein kann. Der Kraftstoff wird entweder in das Ansaugsystem 24 (Saugrohreinspritzung) dosiert oder durch einen Injektor 32 direkt in den Brennraum 12 eingespritzt. (Direkteinspritzung).

Auf jeden Fall wird in dem Brennraum 12 eine brennfähige Brennraumfüllung erzeugt. Der Verbrennungsmotor 10 ist bevorzugt ein Ottomotor, bei dem die Brennraumfüllung durch eine Zündkerze 34 gezündet wird. Bei einem Dieselmotor kann auf die Zündkerze verzichtet werden. Restgase der verbrannten Füllung des Brennraums 12 werden über das geöffnete Auslassventil 18 ausgestoßen.

Der in der Figur 1 dargestellte Verbrennungsmotor 10 weist einen Abgasturbolader 36 auf, dessen Turbinenrad 38 von den ausgestoßenen Abgasen angetrieben wird und das seinerseits ein Verdichterrad 40 im Ansaugsystem 24 antreibt. Der Abgasturbolader 36 weist ein Stellglied 42 mit einem elektrischen Antrieb 43 zur Steuerung der Geometrie des Turboladers 36 auf. Der elektrische Antrieb 43 ist typischerweise ein Elektromotor, der in Verbindung mit einer Mechanik des Stellgliedes 42 eine geradlinige oder gekrümmt verlaufende Stellbewegung erzeugt. Der vom Turbolader 36 erzeugte Ladedruck p_Iade_ist wird von einem Ladedrucksensor 45 erfasst.

Drehmomentanforderungen eines Fahrers werden durch einen Fahrerwunschgeber 44 erfasst, der die Stellung eines Fahrpedals 46 des Kraftfahrzeugs als Fahrerwunsch FW erfasst. Ein Drehwinkelsensor 48 tastet Winkelmarkierungen eines drehfest mit einer Kurbelwelle des Verbrennungsmotors 10 verbundenen Geberrades 50 ab und liefert damit eine Information über die Winkellage und Winkelgeschwindigkeit der Kurbelwelle. Die Winkelgeschwindigkeit ist ein Maß für die Drehzahl n des Verbrennungsmotors 10.

Es versteht sich, dass zur Steuerung und/oder Regelung des Verbrennungsmotors 10 bei modernen Kraftfahrzeugen eine Vielzahl weiterer Sensoren vorhanden sein kann, die Drücke, Temperaturen, Winkellagen von Nockenwellen und/oder weitere Betriebsparameter des Verbrennungsmotors 10 erfassen. Die Erfindung ist daher nicht auf eine Verwendung bei einem Verbrennungsmotor 10 beschränkt, der nur die bisher angegebenen Sensoren 28, 30, 44, 45, 48 aufweist. So kann der elektrische Antrieb 43 in einer Ausgestaltung eine Information I_TSQ über einen Istwert des Turbinenströmungsquerschnitts TSQ, zum Beispiel einen Istwert einer eingestellten Leitschaufelposition, für eine Regelung der Leitschaufelposition in einem geschlossenen Kreis oder ein Eigendiagnoseergebnis bereit stellen.

Zur Steuerung des Verbrennungsmotors 10 werden die Signale des integrierten Drosselklappensensors 28, des Füllungssensors 30, des Fahrerwunschgebers 44, des Ladedrucksensors 45, des Drehwinkelsensors 48, die optional vorhandene Information I_TSQ und ggf. die Signale alternativer oder weiterer Sensoren von einem Motorsteuergerät 52 verarbeitet, dass zur Steuerung des Ablaufs des erfindungsgemäßen Verfahrens und/oder einer oder mehrerer seiner Ausgestaltungen eingerichtet, insbesondere programmiert ist. Das Steuergerät 52 zeichnet sich insbesondere dadurch aus, dass es aus den erhaltenen Informationen und Signalen Stellsignale zur Steuerung von Funktionen des Verbrennungsmotors 10 bildet. In der Ausgestaltung der Fig. 1 sind dies im Wesentlichen Drosselklappenstellsignale S_DK und Signale S_TSQ, mit denen das Steuergerät 52 einen Turbinen-Strömungsquerschnitt TSQ steuert, sowie Einspritzimpulsbreiten ti und Zündsignale.

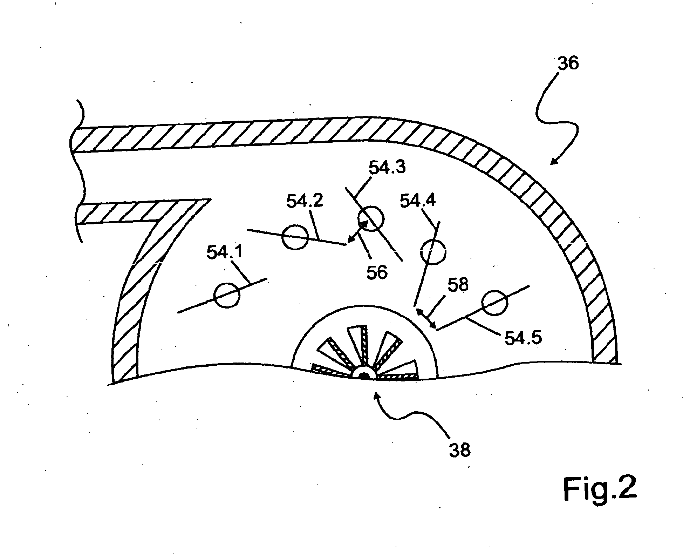

Fig. 2 zeigt eine Ausgestaltung einer Turbine eines Turboladers 36 mit ringförmig angeordneten Leitschaufeln 54.1, 54.2, 54.3, 54.4 und 54.5. Abweichend von der Realität, in der sämtliche Leitschaufeln 54.1, 54.2, 54.3, 54.4 und 54.5 gleich eingestellt werden, sind die Leitschaufeln 54.1, 54.2 und 54.2 in einer geschlossenen Stellung mit einem kleinen Strömungsquerschnitt 56 und die Leitschaufeln 54.4. und 54.5 in einer weiter offenen Stellung mit einem größeren Strömungsquerschnitt 58 dargestellt. Der Grundladedruck wird dabei mit dem größeren Strömungsquerschnitt 58 dargestellt. Die Verstellung erfolgt durch das Stellglied 42, das zum Beispiel einen mit den Leitschaufeln über bewegliche Hebel verbundenen Verstellring betätigt. Details der Mechanik sind für die Erfindung nicht wesentlich.

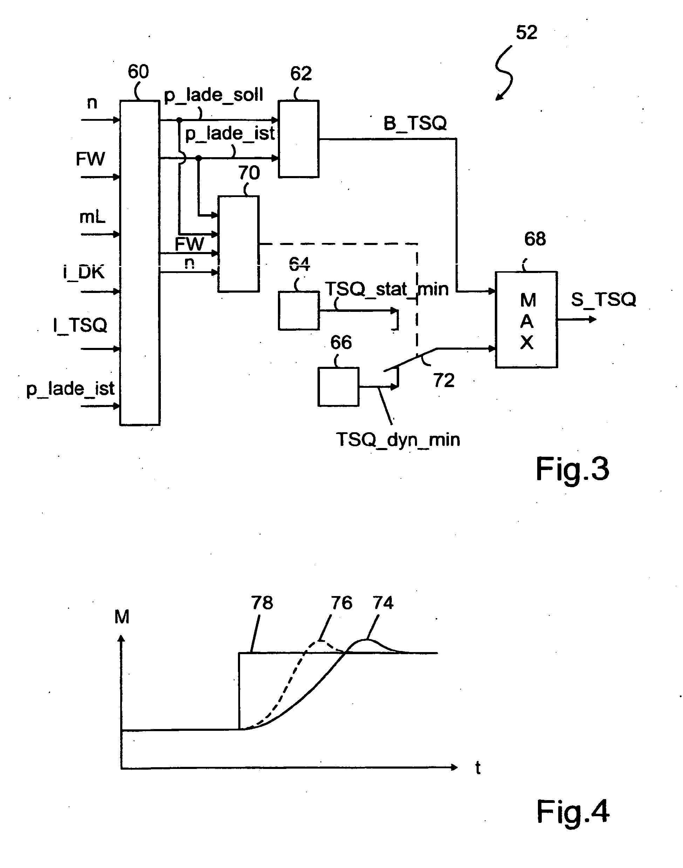

Fig. 3 zeigt ein Ausführungsbeispiel eines erfindungsgemäßen Steuergeräts 52 in Funktionsblockdarstellung. Dabei sind verschiedene Funktionen des Steuergeräts 52, die für die Steuerung des Verbrennungsmotors 10 zwar wichtig, für ein Verständnis der Erfindung aber weniger wichtig sind, in einem Block 60 zusammengefasst. Der Block 60 bereitet die Signale der im Zusammenhang mit der Fig. 1 genannten Sensoren auf und bildet daraus Stellgrößen zur Ansteuerung der in der Fig. 1 dargestellten Stellglieder mit Ausnahme des elektrischen Stellgliedes 43 für den Turbolader 36. So bildet der Block 60 unter anderem Einspritzimpulsbreiten ti zur Ansteuerung von Injektoren 32 und ein Drosselklappenstellsignal S_DK.

Ferner wird innerhalb des Steuergeräts 52 auch ein Sollwert p_lade_soll für eine Regelung des Ladedrucks des Turboladers 36 erzeugt. In der Darstellung der Fig. 3 wird dieser Sollwert ebenfalls im Block 60 als Funktion eines oder mehrerer Eingangssignale erzeugt. Der Sollwert hängt typischerweise vom Fahrerwunsch, der Brennraumfüllung und der Drehzahl ab. Ein Ladedruckregler 62 verarbeitet den Sollwert p_lade_soll und einen vom Block 60 bereitgestellten Istwert p_lade_ist zu einem Basiswert B_TSQ für den einzustellenden Turbinenströmungsquerschnitt TSQ.

Die Blöcke 64, 66, 68 und 70 dienen zur Begrenzung des Reglereingriffs und verhindern dadurch das Auftreten eines unvorteilhaft großen Spülgefälles als Folge eines zu stark verengten Turbinenströmungsquerschnitts. Dabei geben die Blöcke 64 und 66 jeweils eine untere Grenze eines Bereichs einstellbarer Werte des Turbinenströmungsquerschnitts aus. Der Block 64 stellt eine untere Grenze TSQ_stat_min für stationäre Betriebszustände bereit und der Block 66 stellt eine untere Grenze TSQ_dyn_min für dynamische, also instationäre Betriebszustände bereit. Die untere Grenze TSQ_dyn_min wird dabei vom Block 66 in Abhängigkeit von der Drehzahl n als Betriebsparameter des Verbrennungsmotors 10 nach einem vorbestimmten Zusammenhang bestimmt. Dabei ist der Zusammenhang insbesondere so vorbestimmt, dass ein Einstellen des Turbinenströmungsquerschnitts auf den Wert TSQ_dyn_min noch nicht zu einem unvorteilhaft großen Spülgefälle führt.

Rein qualitativ betrachtet wird der minimal erlaubte Turbinenströmungsquerschnitt bei kleinen Drehzahlen kleiner sein als bei großen Drehzahlen. Wenn die untere Grenze zusätzlich lastabhängig bestimmt wird, wird sie bei kleinen Lasten kleiner sein als bei großen Lasten. Als lastabhängiger oder mit der Last variierender Betriebsparameter kommt jedes im Steuergerät 52 gebildete Maß für eine Kraftstoffeinspritzmenge oder eine Brennraumfüllung mit Luft oder Kraftstoff/Luft-Gemisch in Frage. In jedem Fall gilt jedoch, dass die Abhängigkeit so vorbestimmt ist, dass ein Spülgefälle des Verbrennungsmotors einen vorbestimmten Maximalwert nicht überschreitet.

Die untere Grenze TSQ_stat_min für stationäre Betriebszustände kann konstant oder aber auch von einem oder mehreren Betriebsparametern des Verbrennungsmotors 10 abhängig sein.

Der Block 70 dient zur Unterscheidung von stationären und instationären Zuständen. Bei stationären Zuständen verbindet er den Block 64 über den Schalter 72 mit dem Block 68 und bei instationären Zuständen verbindet er den Block 66 mit dem Block 68. Bei instationären Zuständen liegt am Block 68 also ein Basiswert B_TSQ und eine untere Grenze TSQ_dyn_min an. Der Block 68 wählt das Maximum aus diesen zeitgleich anliegenden Werten aus und gibt das Maximum oder ein dem Maximum zugeordnetes Signal als Stellsignal S_TSQ zur Ansteuerung des elektrischen Stellgliedes 43 aus.

Mit anderen Worten: Wenn der Regler 62 einen Basiswert B_TSQ ausgibt, der im instationären Fall zu einem Querschnitt führen würde, der kleiner als die vorgegebene untere Grenze TSQ_dyn_min wäre, wird stattdessen der größere Querschnitt TSQ_dyn_min eingestellt. Gibt der Regler 62 dagegen einen Basiswert B_TSQ aus, der zur einem größeren Querschnitt führt, wird dieser Querschnitt eingestellt.

Für eine Unterscheidung von stationären und instationären Betriebszuständen überwacht der Block 70 in einer Ausgestaltung den Fahrerwunsch und/oder den Ladedruck-Sollwert und/oder den Ladedruck-Istwert und/oder die Drehzahl auf Änderungen und bewertet einen Betriebszustand dann als instationär, wenn eine Änderungsgeschwindigkeit von wenigstens einem der überwachten Werte einen vorgegebenen ersten Schwellenwert überschreitet. Bei einer Schwellenwertüberschreitung verbindet er den Block 66 mit dem Block 68. Ein Ende des instationären Betriebszustandes wird in einer Ausgestaltung entsprechend durch Unterschreitung eines zweiten Schwellenwertes erkannt. Weitere Ausgestaltungen unterscheiden sich dadurch, dass der erste Schwellenwert und der zweite Schwellenwert gleich oder verschieden sind. Bei verschiedenen Schwellenwerten ist der zweite Schwellenwert bevorzugt kleiner, um eine Hysterese zu erzeugen. Im Rahmen einer weiteren Alternative erfolgt die Umschaltung des Schalters 72 zeitgesteuert, so dass der instationäre Betriebszustände charakterisierende Schaltzustand in seiner Dauer begrenzt ist.

Insgesamt wird durch das hier vorgestellte Verfahren ein Auftreten von betragsmäßig unvorteilhaft großen Spülgefällen vermieden. Durch das mit Rücksicht auf das Spülgefälle erfolgende Begrenzen des Turbinenströmungsquerschnitts in instationären Betriebszuständen in Abhängigkeit von der Drehzahl wird ein gegenüber dem Stand der Technik schnellerer Ladedruck- und Drehmomentanstieg erreicht. Fig. 4 veranschaulicht diese Wirkung durch einen Vergleich eines Drehmomentanstiegs 74 mit herkömmlicher Verstellung der Leitschaufeln und eines Drehmomentanstiegs 76 mit erfindungsgemäßer Begrenzung der Verstellung der Leitschaufeln bei einem stufenförmigen Anstieg des Solldrehmoments 78 in willkürlichen Einheiten über der Zeit t.

Bei Verbrennungsmotoren mit mehreren Turboladern mit verstellbarer Turbinengeometrie wird das Verfahren und/oder eine oder mehrere seiner Ausgestaltungen entsprechend für sämtliche Turbolader angewendet.

Das beschriebene Verfahren kann grundsätzlich an Ottomotoren und Dieselmotoren verwendet werden. Bei der Verwendung des Verfahrens bei Ottomotoren treten die Vorteile jedoch aus den folgenden Gründen noch stärker hervor: Im Gegensatz zum Dieselmotor, der in der Regel ungedrosselt betrieben wird, werden Ottomotoren im Teillastbereich gedrosselt betrieben.

Der Dieselmotor arbeitet in der Teillast mit Luftüberschuss. Das gewünschte Drehmoment wird über die zudosierte Kraftstoffmenge eingestellt, also bei im Wesentlichen gleicher Brennraumfüllung über die Qualität der Brennraumfüllung eingestellt. Im Ergebnis liefert der Dieselmotor daher auch im Teillastbereich, in dem er nur wenig Drehmoment erzeugt, einen vergleichsweise großen Abgasmassenstrom, der die Turbine auf Drehzahl hält und permanent einen vergleichsweise hohen Ladedruck erzeugt. Eine schließende Ansteuerung der Leitschaufelverstellung führt dann auch ohne weitere Maßnahmen praktisch verzögerungslos zu einer erhöhten Turbinenleistung, einem erhöhten Ladedruck und damit zu einem schnellen Anstieg der Brennraumfüllungen und des Drehmomentes des Dieselmotors.

Die Leistung des Ottomotors wird dagegen über die Menge des in den Brennräumen verbrannten Gemisches eingestellt. Bei kleinen Leistungen, also bei niedrigen Drehmomenten und/oder Drehzahlen, ergibt sich dann auch nur ein entsprechend geringer Abgasmassenstrom. In Betriebszuständen mit niedrigen Abgasmassenströmen fällt daher die Turbinendrehzahl und damit der Ladedruck vergleichsweise stark ab. Der Turbolader muss daher beim Ottomotor aus geringeren Drehzahlen heraus beschleunigt werden. Er reagiert daher einerseits empfindlicher auf ein unvorteilhaft großes Spülgefälle. Andererseits treten die vorteilhaften Effekte der Vermeidung des unvorteilhaft großen Spülgefälles beim Ottomotor auch deutlicher hervor.

## Patentansprüche

1. Verfahren zur Einstellung eines Turbinenströmungsquerschnitts (TSQ, 56, 58) eines Turboladers (36) eines Verbrennungsmotors (10), wobei in instationären Betriebszuständen eine untere Grenze (TSQ_dyn_min) eines Bereichs einstellbarer Werte des Turbinenströmungsquerschnitts (TSQ, 56, 58) in Abhängigkeit von einem Betriebsparameter des Verbrennungsmotors bestimmt wird, **dadurch gekennzeichnet, dass** als Betriebsparameter eine Drehzahl (n) des Verbrennungsmotors (10) verwendet wird und dass die Abhängigkeit so vorbestimmt ist, dass ein Spülgefälle des Verbrennungsmotors (10) einen vorbestimmten Maximalwert nicht überschreitet.

2. Verfahren nach Anspruch 1, **dadurch gekennzeichnet, dass** die untere Grenze (TSQ_dyn_min) zusätzlich in Abhängigkeit von einem mit der Last des Verbrennungsmotors variierenden Betriebsparameter des Verbrennungsmotors (10) bestimmt wird.

3. Verfahren nach Anspruch 2, **dadurch gekennzeichnet, dass** der mit der Last variierende Betriebsparameter ein Maß für eine Kraftstoffeinspritzmenge oder eine Brennraumfüllung mit Luft oder Kraftstoff/Luft-Gemisch ist.

4. Verfahren nach einem der vorhergehenden Ansprüche, **dadurch gekennzeichnet, dass** eine Ladedruckregelung einen Basiswert (B_TSQ) für den einzustellenden Turbinenströmungsquerschnitt (TSQ, 56, 58) bildet und ein tatsächlich einzustellender Turbinenströmungsquerschnitt durch eine Maximalauswahl aus dem Basiswert (B_TSQ) und der unteren Grenze (TSQ_dyn_min) bestimmt wird.

5. Verfahren nach einem der vorhergehenden Ansprüche, **dadurch gekennzeichnet, dass** ein Fahrerwunsch (FW) und/oder ein Ladedruck-Sollwert (p_lade_soll) und/oder ein Ladedruck-Istwert (p_lade_ist) und/oder die Drehzahl (n) auf Änderungen überwacht werden und ein Betriebszustand dann als instationär gilt, wenn eine Änderungsgeschwindigkeit von wenigstens einem der überwachten Werte einen vorgegebenen Schwellenwert überschreitet.

## Claims

1. Method for setting a turbine flow cross section (TSQ, 56, 58) of a turbocharger (36) of an internal combustion engine (10), wherein in transient operating states, a lower limit (TSQ_dyn_min) of a range of settable values of the turbine flow cross section (TSQ, 56, 58) is determined depending on an operating parameter of the internal combustion engine, **characterized in that** a rotational speed (n) of the internal combustion engine (10) is used as an operating parameter, and **in that** the dependency is predetermined such that a scavenging gradient of the internal combustion engine (10) does not exceed a predetermined maximum value.

2. Method according to Claim 1, **characterized in that** the lower limit (TSQ_dyn_min) is determined additionally as a function of an operating parameter of the internal combustion engine (10), which operating parameter varies with the load of the internal combustion engine.

3. Method according to Claim 2, **characterized in that** the operating parameter which varies with the load is a measure for a fuel injection quantity or for a combustion chamber charge with air or fuel/air mixture.

4. Method according to one of the preceding claims, **characterized in that** a charge-pressure regulating arrangement forms a base value (B_TSQ) for the turbine flow cross section (TSQ, 56, 58) to be set, and a turbine flow cross section which is actually to be set is determined by way of a maximum selection from the base value (B_TSQ) and the lower limit (TSQ_dyn_min).

5. Method according to one of the preceding claims, **characterized in that** a driver demand (FW) and/or a charge pressure nominal value (p_lade_soll) and/or a charge pressure actual value (p_lade_ist) and/or the rotational speed (n) are monitored for changes and an operating state is considered to be transient when a rate of change of at least one of the monitored values exceeds a predefined threshold value.

## Revendications

1. Procédé pour ajuster une section de passage d'une turbine (TSQ, 56, 58) d'un turbocompresseur (36) d'un moteur à combustion interne (10), dans lequel, dans des états de fonctionnement non stationnaires, une limite inférieure (TSQ_dyn_min) d'une région de valeurs ajustables de la section de passage de la turbine (TSQ, 56, 58) est déterminée en fonction d'un paramètre de fonctionnement du moteur à combustion interne, **caractérisé en ce que** l'on utilise comme paramètre de fonctionnement un régime (n) du moteur à combustion interne (10) et **en ce que** la dépendance est préétablie de telle sorte qu'un gradient de balayage du moteur à combustion interne (10) ne dépasse pas une valeur maximale prédéterminée.

2. Procédé selon la revendication 1, **caractérisé en ce que** la limite inférieure (TSQ_dyn_min) est déterminée en outre en fonction d'un paramètre de fonctionnement du moteur à combustion interne (10) variant avec la charge du moteur à combustion interne.

3. Procédé selon la revendication 2, **caractérisé en ce que** le paramètre de fonctionnement variant avec la charge est une mesure d'une quantité d'injection de carburant ou d'un remplissage de la chambre de combustion avec de l'air ou un mélange d'air et de carburant.

4. Procédé selon l'une quelconque des revendications précédentes, **caractérisé en ce qu'**une régulation de la pression de charge forme une valeur de base (B_TSQ) pour la section de passage de la turbine (TSQ, 56, 58) à ajuster et une section de passage de turbine à ajuster effectivement est déterminée par un choix maximum entre la valeur de base (B_TSQ) et la limite inférieure (TSQ_dyn_min).

5. Procédé selon l'une quelconque des revendications précédentes, **caractérisé en ce qu'**un souhait du conducteur (FW) et/ou une valeur de consigne de la pression de charge (p_lade_soll) et/ou une valeur réelle de la pression de charge (p_lade_ist) et/ou le régime (n) sont contrôlés en termes de variations, et un état de fonctionnement est alors considéré comme non stationnaire lorsqu'une vitesse de variation d'au moins l'une des valeurs contrôlées dépasse une valeur seuil prédéterminée.
